(19) **Europäisches Patentamt / European Patent Office / Office européen des brevets**

(11) **EP 2 612 481 B1**

(12) **EUROPEAN PATENT SPECIFICATION**

(45) Date of publication and mention
of the grant of the patent:
**21.10.2015 Bulletin 2015/43**

(21) Application number: **11748600.1**

(22) Date of filing: **18.07.2011**

(51) Int Cl.:
*H04L 29/06* (2006.01)      *H04L 12/26* (2006.01)

(86) International application number:
**PCT/EP2011/062193**

(87) International publication number:
**WO 2012/028375 (08.03.2012 Gazette 2012/10)**

(54) **Method and system for classifying traffic**

Verfahren und System zum Klassifizieren von Verkehr

Procédé et système de classification de trafic

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2010 ES 201031320 P**

(43) Date of publication of application:
**10.07.2013 Bulletin 2013/28**

(73) Proprietor: **TELEFÓNICA, S.A.**
**28013 Madrid (ES)**

(72) Inventors:
• **AMAYA CALVO, Antonio, Manuel**
**E-28013 Madrid (ES)**
• **PEREZ IGLESIAS, Santiago**
**E-28013 Madrid (ES)**

(74) Representative: **Carpintero Lopez, Francisco et al**
**Herrero & Asociados, S.L.**
**C/Alcalá 35**
**28014 Madrid (ES)**

(56) References cited:
**WO-A2-2004/012063      US-A- 6 088 804**

• **TEVFIK KIZILOREN ET AL: "Anomaly Detection
with Self-Organizing Maps and Effects of
Principal Component Analysis on Feature
Vectors", NATURAL COMPUTATION, 2009. ICNC
'09. FIFTH INTERNATIONAL CONFERENCE ON,
IEEE, PISCATAWAY, NJ, USA, 14 August 2009
(2009-08-14), pages 509-513, XP031588381, ISBN:
978-0-7695-3736-8**

**Description**

FIELD OF THE INVENTION

The invention relates to the field of IT security, more in particular, it refers to a new method and system for the automatic detection and classification of the patterns generated by malicious software over a communications network.

STATE OF THE ART

The current IT security landscape is dreary. Today, security threats are rapidly increasing. New variants of malicious software (also called malware) are continuously being developed and distributed. It's estimated that more malware has been developed on the last sixth months alone than on the rest of the computer science history.
Currently all aspects of the network experience are affected by security threats, from the quality of experience, to the network infrastructure. According to the latest 'Study on Information security and e-trust on Spanish Households', 8th wave, first quarter 2009. INTECO, October 2009 (Spanish versi*on)*, about 44% of users consider security a main limitation to restrict use of new services.
Despite heavy investments in anti-virus, malware is still the number one security problem:

- While more than 99% percent of organizations use antivirus and 98% use firewalls, still Malware damage exceeds $55 billion annually *[*Computer Security Institute (CSI)/Federal Bureau of Investigation (FBI) 2004 Computer Crime and Security Survey http://www.gocsi.com/forms/csi_survey.jhtml*]*.
- Second most expensive computer security incidents where those relating with "bots", the overall average annual loss reported was just under $300,000 *[*Computer Security Institute (CSI)/Federal Bureau of Investigation (FBI) 2008 Computer Crime and Security Survey http://www.gocsi.com/forms/csi_survey.jhtml*]*. Trying to control the problem directly on the affected systems is a losing proposition:
- Over 10% increase in Malware in first quarter of 2009 (Source: PandaLabs)
- While more than 91.2% of the users, polled on the above mentioned *'Study on Information security and e-trust on Spanish Households'*, use antivirus, 63.8% of them have at least one malicious program on their computers. That means that at least 84.32% of them of the infected computers have an updated antivirus running.

Almost all threats currently share a common point: they use the network to coordinate, distribute, patch, control and ultimately profit.

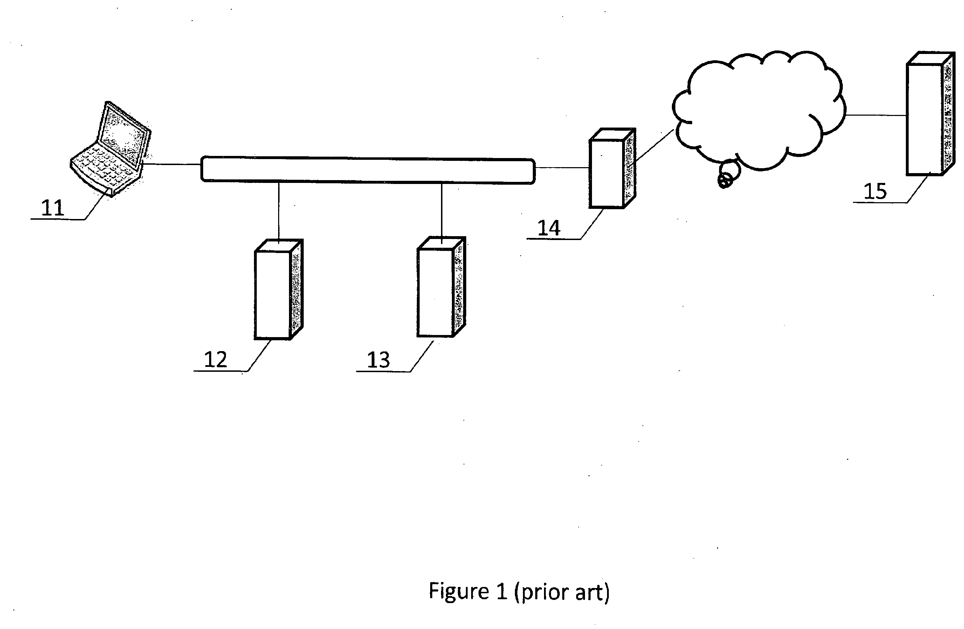

Figure 1 shows a high level scheme of the protection and mitigation factors that can be deployed to protect users, where 15 represents the Malware Origin/controller. It comprises:

- End Point protection 11, which defines all the protections that have to be deployed and run directly on the user's computer.
- Security Information and Event Management (SIEM) 12, Intrusion Detection (ID) 13 and Firewalls/Filter Services 14 are protections that have to be deployed at the network level.

Some of the above solutions/mitigating factors used currently are described next:

**• End point based protection**

*"*Within a few months of the first PC viruses appearing in the wild in 1987, companies had set up to sell antivirus software. This led to an arms race in which each tried to outwit the other. Early software came in basically two flavours - scanners and checksummers" [Security Engineering, 2nd edition. Ross Anderson, Wiley Publishinc Inc. ISBN: 978-0-470-06852-6*]*.
'End point based protection' refers to the set of solutions that have to be deployed and run directly on the user's computer. These solutions work by controlling what other processes are running on the machine, and what actions they do.

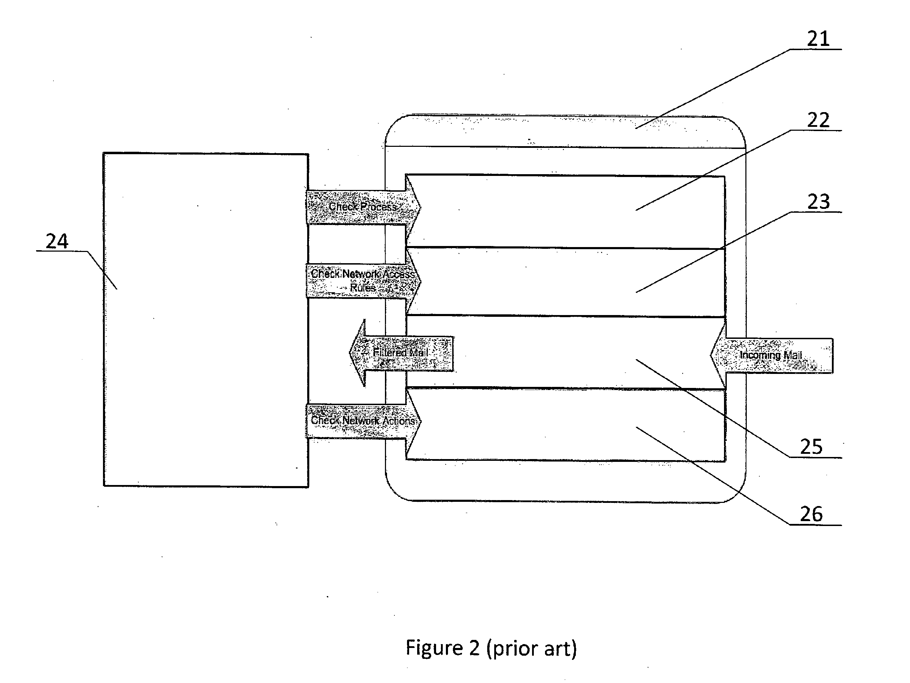

Figure 2 shows the typical interaction between any running process 24 (on the user's computer) and the End Point Protection Suite 21.
Typically, the original end point protections 21 can be divided in two big groups:

- ○ Scanners 22 are programs that search for 'signatures' in the files on the system in which they're installed. A 'signature' in this context is a small part of binary digits (a string) that is contained on the malware code that the scanner wants to detect.

◦ Checksummers 22 on the other hand work by doing 'white-listing'. The process consists in generating a list of the programs that should be allowed to run (white list). Then for each of the programs on that list a checksum is calculated. When any program is going to run in the system its checksum is calculated and compared with the checksums of the list to see if it is authorized or not.

After the first antivirus came out, an arms race ensured. For each new technique the antivirus included, the malware included a countermeasure, and so on. Some of the techniques the viruses use to deceive antivirus are:

◦ Polymorphism: The virus changes itself each time it replicates, to avoid being detected by scanners.
◦ Encryption: The virus code is encrypted, to difficult analysis and detection. Usually encryption is part of polymorphism (simply changing the encryption key generates a new signature).
◦ Stealth: To avoid detection by checksummers, viruses try to avoid the monitored system calls and monitor themselves the system calls that the checksummers use to do their work, hiding themselves whenever one is called.

From those early days, though, the end point protection has been complicated a lot.
Currently, any security suite includes two or more of the following parts, as shown in figure 2:

◦ Personal Firewall 23: Blocks unwanted network connections, both incoming and outgoing. It can block connections on a per-process basis, or just by the network (origin/destination) characteristics.
◦ Antivirus/antimalware: Examines local files and running processes, using a variation of the techniques described before, with lots of variations (support for encrypted and polymorphic files, for example). The software doesn't only search for viruses but for other types of infections (Trojans, worms, and etcetera).
◦ Anti-Spam 25: Filter that tries to block unwanted mail (spam).
◦ Intrusion Detection System (IDS) 26: Some solutions also include a rudimentary type of IDS 26. IDS 26 are described later on.

• **Network based protection**

Defense on the network relies on tools that can be broadly categorized on three sets:

1. Filtering
2. Intrusion detection
3. Security Information and Event Management

**Filtering** tools include tools like firewalls, spam filters and censorware. Firewalls are chokepoints that examine the flow of packets and decide to let them pass or drop them according to a set of predetermined rules. Spam filters are tools that examine incoming and outgoing mail and try to determine if it's a legit mail or an unwanted mail (spam), before the end user is involved. A spam filter can be run on any part of the mail circuit (from the origin point to any of the remailers, to the mail reader application on the end user's device). Censorware are a set of tools that control what content the users are allowed to see. It works similarly to a firewall (it lets traffic flow or blocks it) but works at an application level. Basically any security tool that decides if it should let any part of network traffic flow or drop can be categorized here. Filtering can be done at any level, IP packet level, TCP session level, application level, etc.
**Intrusion Detection Systems** 26 are systems used to analyze network traffic flow and try to detect some patterns that are categorized as being evil. Some examples of the traffic that an IDS might detect include:

◦ Spam coming from a machine on the controlled network.
◦ Packets with forged source addresses.
◦ Machines trying to contact 'known bad' services such as IRC channels used to control botnets.
◦ Known 'network signature' for viruses or other malware. A 'network signature' is a packet or set of packets that a known malware generates.

Usually IDS 26 don't stop the flow, they just report it so a corrective action might be taken. The simplest intrusion detection method is to generate an alarm when a threshold is passed. For example, three or more failed logons, or a mobile phone call lasting more than six hours might flag the account in question for attention. More sophisticated systems generally fall into two categories:

◦ Misuse detection systems operate using a model of the likely behavior of an intruder.
◦ Anomaly detection systems attempt the much harder job of looking for anomalous patterns of behavior in the absence of a clear model of the attacker modus operandi, on the hope to detect attacks that have not been previously recognized and catalogued.

**Security Information and Event Management (SIEM)** 12 tools are tools that recollect information from both the network defense systems (such as firewalls 14 23 and IDS 26) and some monitored systems (web server logs, LDAP logs, etcetera) on a central point. The information collected can then be automatically correlated by a set of predetermined rules to try to detect problems that can't be detected on any single point. The information can also be used to do forensic audits after a problem has happened.

*"Recently, antivirus software seems to be getting steadily less effective. The commercialization of botnets and of machine exploitation has meant that malware writers have decent tools and training. Almost all Trojans and other exploits are undetectable by the current antivirus products when first launched - as their writers test them properly - and many of them run their course (by recruiting their target number of machines) without coming to the attention of the antivirus industry. The net effect is that while antivirus software might have detected almost all of the exploits in circulation in the early 2000s, by 2007 the typical product might detect only a third of them"* [Security Engineering, 2nd edition. Ross Anderson, Wiley Publisinc Inc. ISBN: 978-0-470-06852-6*]*.

Next, several current problems with end point based protection solutions are mentioned:

End point based protection 21 depends on the analysis of malware to counteract it. As such, the antivirus/antimalware industry is always lagging behind the attackers, because of the own nature of both activities (defense and attack). Attackers (malware industry) get to choose the attack vector and defenders can only adapt and react to new attacks as they appear.

Although new malware is categorized and included on the solutions promptly, there's always a window of time during which the new malware can be installed undetected on machines. And once the malware is installed on a machine, it's quite probable that it won't be detected or removed without a clean boot of the machine. After all, the antimalware depends on the operating system for its operation, and the operating system can be subverted by malware running with enough privileges (rewriting or interception of system calls, for example).

Other problem is that remote attesting (checking the health status of a computer from a remote location) based on software running on the to-be-diagnosed computer is not reliable. Anything than a diagnostic program can send to attest its own integrity can be duplicated by malware running on that same computer. There has been some work (TPM - Trusted Platform Module) to be able to remotely attest the security status of a device, but at the moment end point devices simply cannot be trusted or controlled effectively.

For those reasons, end point protection alone isn't enough, and has to be complemented with some kind of network analysis.

Some problems of current network based protection solutions for detecting or controlling network attacks are:

* Internet is a very noisy environment, at the packet level too. There's a large amount of random malconstructed packets that can generate a significant false alarm rate. A false alarm rate implies an increase in operating costs.

* There are too few attacks. If there are ten real attacks per million sessions, then even if the system has a false alarm rate as low as 0.1%, the ratio of false to real alarms will be 100. Besides the increase in operating costs, it means that probably real alarms will be missed on all the noise.

* Many network attacks are specific to particular versions of software, so a general misuse detection tool must have a large and constantly changing library of attack signatures.

* Security threats are distributed by nature; It has diverse origins, diverse target, and diverse taxonomy of threats. On the other hand, current network analysis tools are centralized on some choke points and mostly isolated.

* Time to answer is critical; attacks must be stopped while they're occurring. But the security tools work mostly on a set of predetermined rules, not very effective against new threats.

* Security tools are more suitable to a small to medium network than to a ISP network, centralized systems simply cannot cope with this kind of load.

* Current systems have a need of constant supervision, but both for economics and operating reasons (real time answer), human intervention should be as scarce as possible.

An example of possible solution for detecting the presence of network intrusions by classifying the traffic in the network is teached in WO 2004/012603,which describes an attack detection system extracting the network traffic flow by a packet sniffer. The packet sniffer parses the extracted packets into constituent components (e.g., packet type, source and destination IP addresses, payload,...) and used them to build multi-dimensional vectors, in order to classify anomalous behaviours based upon a correlation analysis and metrics applied to a selection of the constructed vectors.

SUMMARY OF THE INVENTION

The present Invention tries to solve the above mentioned drawbacks by means of a method and system which categorize traffic based on a neural network clustering algorithm. The basis of the invention is the automatic detection and classification of the patterns generated by malware over the network.

To that extent, all network packets are automatically assigned a 'class'. Said class, also called set of classification values, represents the kind of packet, and is used to filter, or mark packets or flows for further analysis.

In particular, in one aspect of the present invention, a method for classifying traffic in a communication network according to claim 1 is provided.

The calculated set of classification values preferably comprises two bytes $V_1$ and $V_2$, where: $V_1$ is the result of projecting $C_2$ into a one dimensional space using a neural network transformation that preserves the topological order (relative distance between nodes) and $V_2$ is the result of projecting $C_3$ into a one dimensional space using a neural network transformation that preserves the topological order (relative distance between nodes).

The distance between nodes is preferably computed as:

$$D(A,B,p,i) = \sum_j W_{pij}\left(C(A)_{pij} - C(B)_{pij}\right)^2 ,$$

where: $C(X)_{pij}$ is used to refer to a concrete element of the packet $X$ characterization, p is the protocol, $i$ is the coordinate of said vector ($C_1$, $C_2$, $C_3$) assigned by the second module (32) of the system for which the distance function is applied, $j$ indicates the coordinates of the $C_i$ vector, $A$ and $B$ are the packets whose distance is being measured, and $W_{pij}$ is a vector, customized for each protocol p, and J, I coordinates, used to give more weight to some packet components over others.

The $C_2$ vector preferably comprises at least one of the following coordinates, as read from the captured packet IP header:

    i. Internet Header Length,
    ii. Type of Service,
    iii. Total Length,
    iv. IP Flags,
    v. TTL (Time to Live),
    vi. Fragment Offset,
    vii. Previous Classification, corresponding to the last classification value calculated by the system in the last network node the packet passed through.

The $C_3$ vector, in the case of Transmission Control Protocol (TCP), preferably comprises, at least, one of the following coordinates, as read from the TCP segments of the captured packet:

    i. Source Port,
    ii. Destination Port,
    iii. Flags,
    iv. Window,
    v. Urgent,
    vi. Options,
    vii. Checksum,
    viii. Previous Classification, corresponding to the last classification value calculated by the system in the last network node the packet passed through, as read from the IP header.

The $C_3$ vector, in the case of User Datagram Protocol (UDP), preferably comprises, at least, one of the following coordinates as read from the UDP segments of the captured packet:

i. Source Port,
ii. Destination Port,
iii. Length,
iv. Checksum,
v. Previous Classification, corresponding to the last classification value calculated by the system (30 51 68) In the last network node the packet passed through, as read from the IP header.

The $C_3$ vector, in the case of Internet Control Message Protocol (ICMP), preferably comprises, at least, one of the following coordinates as read from the ICMP segments of the captured packet:

i. Type,
ii. Code,
iii. Checkaum,
iv. Previous Classification, corresponding to the last classification value calculated by the system in the last network node the packet passed through, as read from the IP header.

In a particular embodiment, the method uses the options field of the captured packet IP header to store said calculated set of classification values.

In another aspect of the invention, a system for classifying traffic in a communication network is presented. The system comprises means for carrying out the method previously described.

In particular, the system comprises: a first module, configured for capturing IP packets from said communication network; a second module, configured for profiling said captured packets by assigning one vector to each of said captured packets according to a set of determined characteristics; a third module, configured for calculating a set of classification values for each of said profiled packets according to its IP header information and its specific protocol header information; and a fourth module, configured for rewriting said captured packets' headers, including said calculated classification values on an IP header.

The system is connectable to, at least, one network node of said communication network.

Optionally, the system has two operating modes: a training mode, In which nodes belonging to a neural network are automatically generated, using coordinates $(C_1, C_2, C_3)$ of captured packets from known real network traffic; and a mapping mode, in which captured packets are classified using already generated neural network nodes.

Finally, a computer program comprising computer program code means adapted to perform the method previously described is provided.

BRIEF DESCRIPTION OF THE DRAWING

To complete the description and in order to provide for a better understanding of the invention, a drawing is provided. Said drawing forms an integral part of the description and illustrates a preferred embodiment of architecture for implementing the method of the invention, which should not be interpreted as restricting the scope of the invention, but just as an example of how the invention can be embodied.

Figure 1 is a high level scheme of the protection and mitigation factors that can be deployed to protect users.
Figure 2 shows the typical interaction between any running process (on the user's computer) and the End Point Protection Suite.
Figure 3 shows a schema of a System Element (SE).
Figure 4 a neural network clustering Self Organizing Map (SOM) for the UDP protocol.
Figure 5 is a simplified schema of the integration of the invention on the Internet Service Provider (ISP) network.
Figure 6 shows the way a packet is reclassified on each network element.

DESCRIPTION OF THE PREFERRED EMBODIMENT

This disclosure relates to a method and system, comprising specific hardware and software residing on or near (connected to) the nodes of a communication network, which categorizes traffic based on a neural network clustering algorithm, which will be described later in detail. The basis of the invention is the automatic detection and classification of the patterns generated by malware over the network.

All network packets are automatically assigned a 'class', which represents the kind of packet, and is used to filter, or mark packets or flows for further analysis.

Network packets are classified using two Self Organizing Map (SOM) to map two n-dimensional set of values representing the packet, as profiled by the system, into two one-dimensional values. The two one-dimensional values, plus a byte representing the protocol type will then be grouped Into a one tri-dimensional value which represents the 'class' of the packet A Self Organizing Map is a type of artificial neural network that is trained using unsupervised learning to produce a low dimensional (in this case one-dimensional) representation of a high dimensional input value (the profiled network packet).

The system has two operating modes:

- A training mode, in which clusters are automatically generated, and the network is "trained", based on real network traffic.
- A mapping mode, in which the packets are classified using the trained network.

Since each network node has only a partial visibility of the network traffic, the cluster information is shared between nodes using own network packets as transmission vectors. The cluster information, then, is part of a distance function (later defined) used by the SOM network.

The method and system is integrated in or near (connected to) at least one of the network nodes. Since it has some Deep Packet Inspection (DPI) characteristics, it might be integrated wherever a DPI system is.

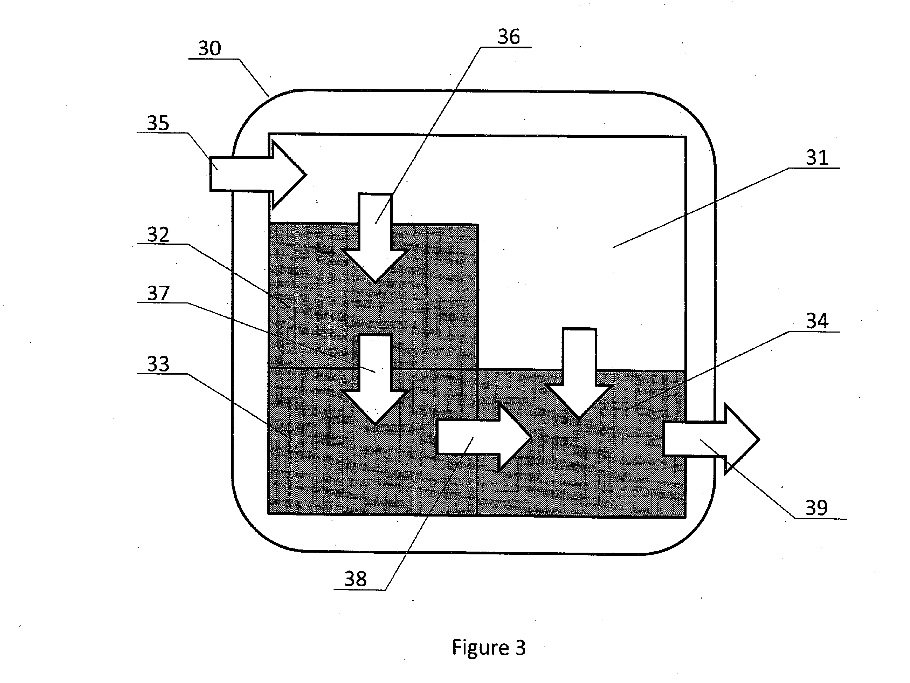

On every network node a System Element (SE) is incorporated. A schema of a SE 30 is shown on Figure 3. The components of a SE 30 are:

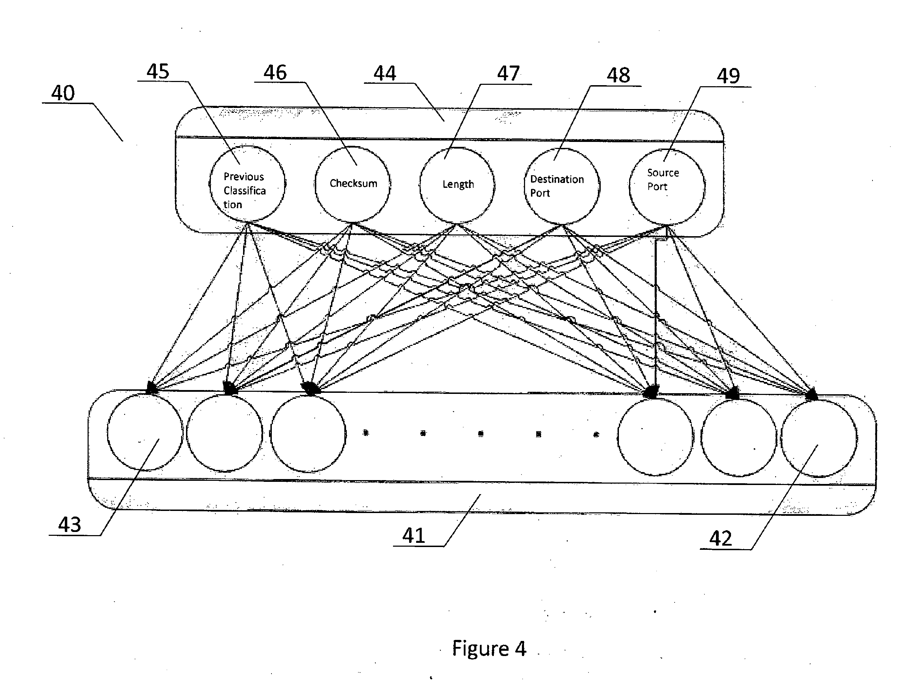

- A. Network Packet Capture Module 31: This module captures IP packets 35 from the network. If a DPI is present, the DPI element can optionally realize this function.
- B. Packet Profiling Module 32: This element profiles a captured packet 36 according to a set of predetermined coordinates (for example, packet length, source and destination, protocol, ...). The profiled packet 37 constitutes the input layer to the neural network 40, as shown on Figure 4. If a DPI is present, this module might be implemented inside the DPI. Full details of this module implementation are available below, in this section.
- C. Clustering Neural Network Module 33: This component takes as input a profiled packet 37, as provided by the packet profiling module 32, and using a neural network calculates a 'cluster value' 38. A cluster value 38 is a tri-dimensional numeric representation of the set or 'cluster' to which the Neural Network believes the packet belongs. The first dimension represents the protocol (and can be omitted from next step (in module D) since it is already explicit on the packet), the second dimension represents the cluster of packets each processed packet belongs to, classified only by its IP headers. The third dimension represents the classification by its specific protocol headers. The clustering neural network algorithm that the system uses is the Self Organizing Maps (Self Organizing Maps). Full details of this algorithm and of the concrete implementation of this element can be found further on this section.
- D. Packet rewriter module 34: This module rewrites the packet headers, including the computed 'Cluster Value', on an IP header. The output of the packet rewriter module 34 is a classified packet 39. Full details of a concrete implementation of the packet rewriter module 34 can be found further on this section.

Note that the Neural Network 40 shown on Figure 4 represents the clustering SOM for the UDP protocol. The output layer 41 in the figure is simplified for clarity's sake. The actual output layer 41 has 266 nodes (from Cluster 0 42 to Cluster 255 43).The neural network 40, then, as defined in SOM, has two layers, an input layer 44 which has a node 45 46 47 48 49 for each coordinate, and a output layer 41 that has as many nodes 42 43 as clusters will have the classified data (256 clusters to use a single byte for its representation).

Thus, for any given process that passes through a network node that has a System Element 30 attached, the following process ensues:

- The Packet is profiled according to a given set of coordinates.
- The packet coordinates (profile) are fed to a neural network, which computes a cluster value 38 that indicates the categorization of the packet according to the network knowledge.
- The packet is then modified to include the categorization on a header, and passed to the next network node as usual.

Since the packet passes through more than one network node, this process might be repeated more than once for each packet (once for each network node It passes). Since one of the coordinates for a packet profiling is the classification value assigned on the previous network node (45 on Figure 4), this means that although each SE 30 only sees part of the packets the information that any SE 30 has on the Neural Network 40 includes information for all the network.

In this sense, the ISP network creates a meta-neural network, in which each SE 30 acts as a neuron (which is by itself a neural network 40 too).

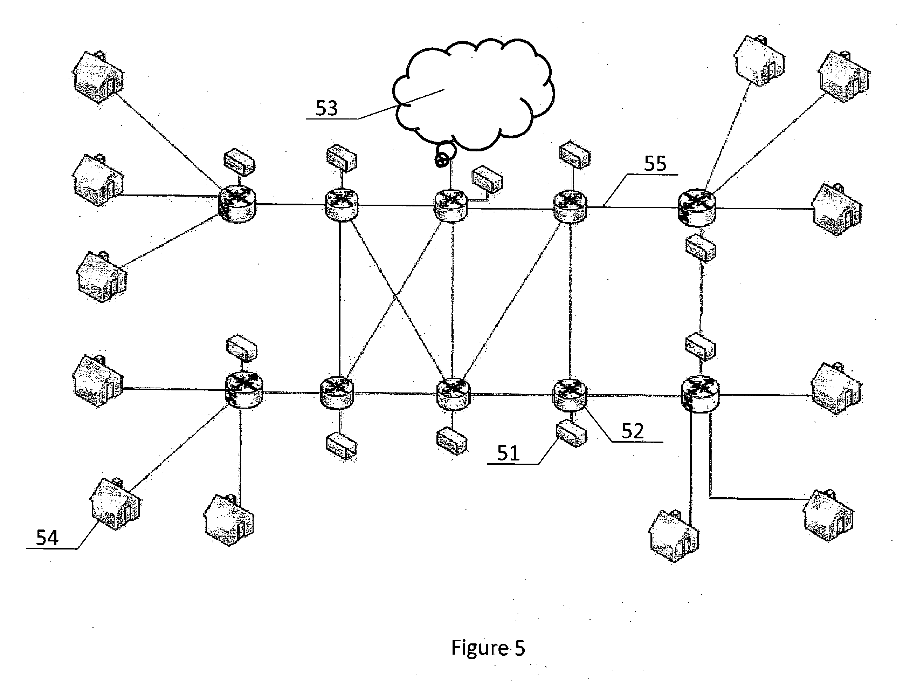

Figure 5 presents a simplified schema of the integration of the invention on the (SP network, where a Communication Network comprising several residential users 54 and its link to other networks 53 is shown. A SE 30 51 is located at each Network Element 52, and the existing network connections 55 are used to communicate the SEs 30 51.

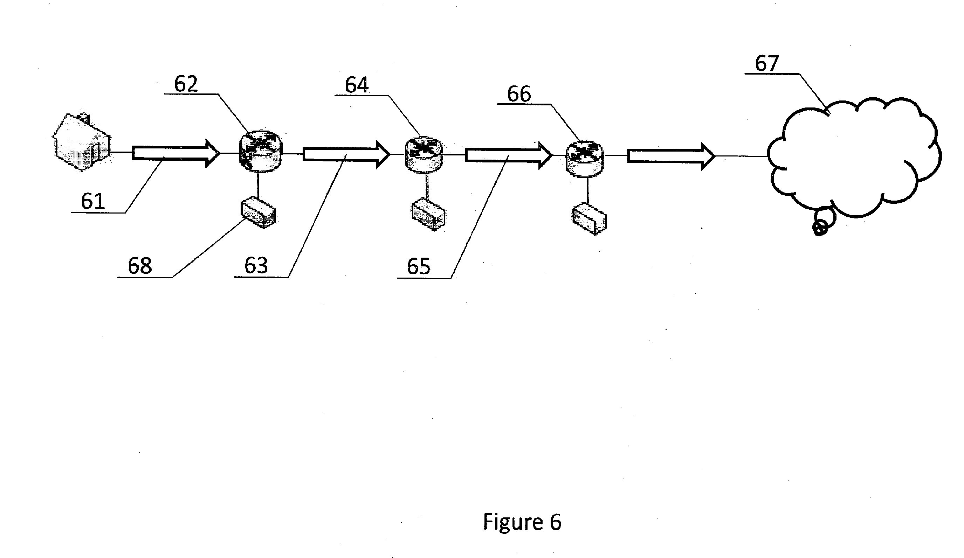

Figure 6 shows the way a packet is reclassified on each network element 52 62 64 66 it traverses through each of the SEs 30 51 68. When the packet is first found, it doesn't have any classification information 61. The first network element 62 classifies the packet, generating a classified packet 63 which is then passed to the next network element 64 it must traverse towards its destination. The second network 64 classifies the network packet again. Since the Self Organizing Map used for classification includes in its input layer the packet classification, the classification is refined. A reclassified packet 65 is then generated. Packet 65 can belong to the same cluster than packet 63, or It might have been moved from cluster (since the neural network in 64 might have a different training).

Before the network packet is passed to external networks 67, the network classification info must be removed. The last network element 66 implements this function.

Although in this state no further action is taken over the packets, once the packet is categorized it is quite easy to use the cluster value to filter the packets at the perimeter (before passing them to a residential user or to other networks 67), or even inside the residential networks. This new security information can easily be integrated with existing security measures, such as IDSs, firewalls, etcetera.

Next, system modules B, C and D and their respective functions are described in detail:

• Module B. Packet Profiling 32

This module reads network packets as provided by Module A, and extracts some Information from them.

A network packet is classified initially into a tri-dimensional vector (C1, C2, C3) where:

    o C1 is the specific protocol of the packet, as read from the IP packet.
    o C2 is a vector that represents the IP characteristics of the packet. The content of the vector is (in the stated order)

        1. Internet Header Length
        2. Type of Service
        3. Total Length
        4. IP Flags
        5. TTL (Time to Live)
        6. Fragment Offset
        7. Previous Classification

    ∘ C3 is a vector that represents the protocol-specific characteristics of the packet. The dimensionality of the vector and its content depend on the specific protocol. As an example, the content for the most usual protocols is as follows:

    **-**    Protocol: TCP

        1. Source Port
        2. Destination Port
        3. Flags
        4. Window
        5. Urgent
        6. Options
        7. Checksum
        8. Previous Classification

    **-**    Protocol: UDP

        1. Source Port
        2. Destination Port
        3. Length
        4. Checksum
        5. Previous Classification

    **-**    Protocol: ICMP

        1. Type
        2. Code

3. Checksum
4. Previous Classification

Terminology $C(X)_{pij}$ is used to refer to a concrete element of the packet *X* characterization. *p* is the protocol, as follows:

  ∘ *t* refers to TCP
  ∘ *u* refers to UDP
  ∘ *i* refers to ICMP

So, for example:

  $C(X)_{t33}$ refers to the flags port of a TCP packet,
  $C(X)_{u33}$ refers to the length of a UDP packet,
  $C(X)_{t21}$ refers to the Previous class (of any IP packet, regardless of it's protocol), so $C(X)_{t21}$, $C(X)_{u21}$ and $C(X)_{l21}$ are synonymous.

• Module C. Clustering Algorithm 33

Module C realizes the classification of characterized network packets, as provided by module B. Module C generates two bytes of information, which represent the cluster (or set) the packet belongs to according to Its IP header information, and the cluster (or set) the packet belongs to according to its specific protocol (TCP, UDP, ICMP, whatever) header information.

Module C implements a multilayer Self Organizing Map (SOM) as the heart of its classification system. A self-organizing map (SOM) or Self-Organizing Feature Map (SOFM) is a type of artificial neural network that is trained using unsupervised learning to produce a low-dimensional (typically two-dimensional), discretized representation of the input space of the training samples, called a map. Self-organizing maps are different from other artificial neural networks in the sense that they use a neighbourhood function to preserve the topological properties of the input space.

Like most artificial neural networks, SOMs operate in two modes: training and mapping. Training builds the map using input examples. It is a competitive process, also called vector quantization. Mapping automatically classifies a new input vector.

A Self-Organizing Map consists of components called nodes or neurons. Associated with each node is a weight vector of the same dimension as the input data vectors and a position in the map space. The usual arrangement of nodes is a regular spacing in a hexagonal or rectangular grid. The Self-Organizing Map describes a mapping from a higher dimensional input space to a lower dimensional map space. The procedure for placing a vector from data space onto the map is to find the node with the closest weight vector to the vector taken from data space and to assign the map coordinates of this node to our vector.

Module B implements a two layered classification, using two SOMs. The first layer classifies the packet according only to its IP characteristics (C2). The second layer classifies the packet according to its specific protocol characteristics (C3).

Each SOM is a one dimensional map, as shown on Figure 4. The input layer has one node for each defined coordinate (six nodes for IP, nine nodes for TCP and so on) and 256 nodes on its output layer.

The process to classify any packet is:

  1.- Classify packet according to the IP SOM. Generate V1.
  2.- Classify packet according to the specific protocol SOM. Generate V2.
  3.- Return V1, V2 as classification value,

where, V1 is the result of projecting C2 into a one dimensional space using a neural network transformation that preserves the topological order (relative distance between nodes) and V2 is the result of projecting C3 into a one dimensional space using a neural network transformation that preserves the topological order (relative distance between nodes). That way, being C and C' two different n-dimensional vectors, V and V' its respective projections, Dn(A,B) and Dm(A,B) the distance functions between 2 points A and B on a n-dimensional and m-dimensional space respectively, then Dn(0n,C)<Dn(0n,C') implies that Dm(0m,V)<Dm(0m,V') being 0n and Om the zero n-dimensional and m-dimensional vector respectively.

Therefore the neural network will classify (cluster) n-dimensional data into a m-dimensional space preserving the relative order between nodes, according to a distance function. To classify the data, then a distance function between vectors must be defined.

V1 and V2 are independent values, since they are the result of projecting different vectors (C2 and C3) into a one dimensional space.

Thus, an important part of the SOM algorithm is the distance function (function that gives the distance between two points). The distance point used is a weighted Euclidean distance function.

The distance d between two points (packets) $A$ and $B$, for protocol $p$, and layer $i$ is defined as:

$$D(A, B, p, i) = \sum_j W_{pij} \left( C(A)_{pij} - C(B)_{pij} \right)^2$$

Where:

- $p$ is the protocol,
- $i$ is the layer of the SOM for which the distance function is applied,
- $A$ and $B$ are the packets whose distance is being measured,
- $W_{pij}$ is a weight vector, customized for each protocol, and layer.

The purpose of the W weight vector is to allow the customization of the clustering algorithm to different network scenarios, giving more weight to some packet component over others. It is possible, even, to ignore any component just by setting its associated $W$ value to 0.

• Module D. Packet Rewriter 34

This module includes the packet classification information (*V1*, *V2)* into the packet, in a way that doesn't affect its traversal through network elements.

To this extent, the system uses the options field of the IP header to store *V1*, *V2*. The fields of the option header are:

- Type 26
- Copy bit (1)
- Class (2)

So the hexadecimal value *D6* will be used as option header. The option field will have a length of 4 bytes. The bytes content will be (hexadecimal):

- Option header: *0xD6*
- Option length: *0x04*
- Content byte 1: *V1*
- Content byte 2: *V2*

The inventive method and system decrease significantly the computational and operational cost of categorizing network traffic for security reasons, since it includes self-learning protocols (on the neural network).

It does not affect existing measures, and can Integrate easily with them providing them with a new parameter (traffic categorization) with which work.

This new parameter describes a security classification of the traffic, at packet level. It allows for easier filtering of malicious traffic. It can also be used to divert traffic to a 'network cleaning area' where selected network flows can be analyzed more deeply. While it is not practical to analyze all the traffic passing through an ISP, this system allows for an easy pre-classification of traffic, allowing the possibility to analyse just the suspicious traffic.

**Claims**

1. A method for classifying traffic in a communication network, wherein said method comprises the steps of:

- capturing IP packets (35) from said communication network;
- profiling said captured packets (36) by assigning one vector to each of said captured packets (36) according to a set of determined characteristics;
- calculating a set of classification values for each of said profiled packets (37) according to its IP header information and header information of a protocol encapsulated in the captured IP packets (36);

**characterised in that** the method further comprises the step of:

• rewriting said captured packets' (35) headers, including said calculated classification values on an IP header;

and **in that** the assigned vector is a tri-dimensional vector ($C_1$, $C_2$, $C_3$) where:

• $C_1$ is the encapsulated protocol of said captured packet (35), as read from the IP header;
• $C_2$ is a vector that comprises information of the IP header data of said captured packet (35);
• $C_3$ is a vector that comprises information of the header data of the encapsulated protocol of said captured packet (35), whose dimension depends on C1 coordinate content.

2. The method of claim 1, wherein said calculated set of classification values comprises two bytes $V_1$ and $V_2$, where:

• $V_1$ is the result of projecting $C_2$ into a one dimensional space using a neural network transformation that preserves the topological order based on a relative distance between nodes and
• $V_2$ is the result of projecting $C_3$ into a one dimensional space using a neural network transformation that preserves the topological order based on a relative distance between nodes.

3. The method of claim 2, wherein said relative distance between nodes is computed as:

$$D(A,B,p,i) = \sum_{j} W_{pij} \left( C(A)_{pij} - C(B)_{pij} \right)^{2}$$

where:

• $C(X)_{pij}$ is used to refer to a concrete element of a packet $X$ characterization,
• $p$ is the protocol,
• $i$ is the coordinate of said vector ($C_1$, $C_2$, $C_3$) assigned by a second module (32) of the system for which the distance function is applied,
• $j$ indicates the coordinates of the $C_i$ vector,
• A and $B$ are the packets whose distance is being measured,
• $W_{pij}$ is a vector, customized for each protocol p, and j, i coordinates, used to give more weight to some packet components over others

4. The method of any claims from 1 to 3, wherein the $C_2$ vector comprises at least one of the following coordinates, as read from the captured packet IP header:

i. Internet Header Length,
ii. Type of Service,
iii. Total Length,
iv. IP Flags,
v. TTL (Time to Live),
vi. Fragment Offset,
vii. Previous Classification, corresponding to the last classification value calculated in the last network node the packet passed through.

5. The method of any claims from 1 to 4, wherein the $C_3$ vector, in the case of Transmission Control Protocol (TCP) comprises, at least, one of the following coordinates, as read from the TCP segments of the captured packet:

i. Source Port,
ii. Destination Port,
iii. Flags,
iv. Window,
v. Urgent,

vi. Options,

vii. Checksum,

viii. Previous Classification, corresponding to the last classification value calculated in the last network node the packet passed through, as read from the IP header.

6. The method of any claims from 1 to 4, wherein $C_3$ vector, in the case of User Datagram Protocol (UDP) comprises, at least, one of the following coordinates as read from the UDP segments of the captured packet:

   i. Source Port,

   ii. Destination Port,

   iii. Length,

   iv. Checksum,

   v. Previous Classification, corresponding to the last classification value calculated in the last network node the packet passed through, as read from the IP header.

7. The method of any claims from 1 to 4, wherein the $C_3$ vector, in the case of Internet Control Message Protocol (ICMP) comprises, at least, one of the following coordinates as read from the ICMP segments of the captured packet:

   i. Type,

   ii. Code,

   iii. Checksum,

   iv. Previous Classification, corresponding to the last classification value calculated in the last network node the packet passed through, as read from the IP header.

8. The method of any preceding claim, further comprising using the options field of the captured packet IP header to store said calculated set of classification values.

9. A system (30 51 68) for classifying traffic in a communication network, wherein said system (30 51 68) comprises means for carrying out the method according to any preceding claim.

10. The system (30 51 68) of claim 9, said system comprising:

   • a first module (31), configured for capturing IP packets (35) from said communication network;

   • a second module (32), configured for profiling said captured packets (36) by assigning one vector to each of said captured packets (36) according to a set of determined characteristics;

   • a third module (33), configured for calculating a set of classification values for each of said profiled packets (37) according to its IP header information and its specific protocol header information;

   • a fourth module (34), configured for rewriting said captured packets' (35) headers, including said calculated classification values on an IP header.

11. The system (30 51 68) of claim 10, wherein said system (30 51 68) is connectable to, at least, one network node (52 62 64 66) of said communication network.

12. The system (30 51 68) of claim 11, wherein said system (30 51 68) is configured for operating in one of two operating modes:

   a. a training mode, in which nodes of a neural network (40) are automatically generated using coordinates $(C_1, C_2, C_3)$ of captured packets (35) from known real network traffic;

   b. a mapping mode, in which captured packets (35) are classified using already generated neural network (40) nodes.

13. A computer program comprising computer program code means adapted to perform the method according to any claims from 1 to 8 when said program is run on a computer, a digital signal processor, a field-programmable gate array, an application-specific integrated circuit, a micro-processor, a micro-controller, or any other form of programmable hardware.

**Patentansprüche**

1. Ein Verfahren zum Klassifizieren von Verkehr in einem Kommunikationsnetz, wobei das Verfahren folgende Schritte aufweist:

   • Erfassen von IP-Paketen (35) von dem Kommunikationsnetz;
   • Profilieren der erfassten Pakete (36) durch Zuweisen eines Vektors zu jedem der erfassten Pakete (36) gemäß einem Satz bestimmter Charakteristika;
   • Berechnen eines Satzes von Klassifizierungswerten für jedes der profilierten Pakete (37) gemäß seinen IP-Kopfblock-Informationen und Kopfblock-Informationen eines Protokolls, das in den erfassten IP-Paketen (36) eingekapselt ist;

   **dadurch gekennzeichnet, dass** das Verfahren ferner folgenden Schritt aufweist:

   • Neuschreiben von Kopfblöcken der erfassten Pakete (35), einschließlich der berechneten Klassifizierungswerte auf einem IP-Kopfblock;

   und dadurch, dass der zugewiesene Vektor ein dreidimensionaler Vektor ($C_1$, $C_2$, $C_3$) ist, wobei:

   • $C_1$ das eingekapselte Protokoll des erfassten Pakets (35) ist, wie es von dem IP-Kopfblock gelesen wird;
   • $C_2$ ein Vektor ist, der Informationen der IP-Kopfblock-Daten des erfassten Pakets (35) aufweist;
   • $C_3$ ein Vektor ist, der Informationen der Kopfblock-Daten des eingekapselten Protokolls des erfassten Pakets (35) aufweist, dessen Dimension von einem C1-Koordinateninhalt abhängt.

2. Das Verfahren gemäß Anspruch 1, bei dem der berechnete Satz von Klassifizierungswerten zwei Bytes $V_1$ und $V_2$ aufweist, wobei:

   • $V_1$ das Ergebnis eines Projizierens von $C_2$ in einen eindimensionalen Raum unter Verwendung einer Neuronal-Netz-Transformation, die die topologische Reihenfolge beibehält, basierend auf einer relativen Entfernung zwi-schen Knoten ist, und
   • $V_2$ das Ergebnis eines Projizierens von $C_3$ in einen eindimensionalen Raum unter Verwendung einer Neuronal-Netz-Transformation, die die topologische Reihenfolge beibehält, basierend auf einer relativen Entfernung zwischen Knoten ist.

3. Das Verfahren gemäß Anspruch 2, bei dem die relative Entfernung zwischen Knoten folgendermaßen berechnet wird:

$$D(A, B, p, i) = \sum_{j} W_{pij} \left( C(A)_{pij} - C(B)_{pij} \right)^2$$

   wobei:

   • $C(X)_{pij}$ verwendet wird, um auf ein konkretes Element einer Paket-X-Kennzeichnung Bezug zu nehmen,
   • p das Protokoll ist
   • i die Koordinate des Vektors ($C_1$, $C_2$, $C_3$) ist, der durch ein zweites Modul (32) des Systems zugewiesen wird, für das die Entfernungsfunktion angewendet wird,
   • j die Koordinaten des $C_j$-Vektors anzeigt,
   • A und B die Pakete sind, deren Entfernung gerade gemessen wird,
   • $W_{pij}$ ein Vektor ist, der für jedes Protokol p und j, i-Koordinaten speziell angepasst ist, der verwendet wird, um einigen Paketkomponenten gegenüber anderen mehr Gewicht zu verleihen.

4. Das Verfahren gemäß einem der Ansprüche 1 bis 3, bei dem der $C_2$-Vektor zumindest eine der folgenden Koordinaten aufweist, wie sie von dem erfassten Paket-IP-Kopfblock gelesen werden:

   i Internet-Kopfblock-Länge,
   ii Diensttyp,
   iii Gesamtlänge,

iv IP-Flags,
v TTL (Time to Live),
vi Fragmentversatz,
vii vorherige Klassifizierung, entspricht dem letzten Klassifizierungswert, der in dem letzten Netzknoten berechnet wird, durch den das Paket gelaufen ist.

5. Das Verfahren gemäß einem der Ansprüche 1 bis 4, bei dem der $C_3$-Vektor in dem Fall des Transmission Control Protocol (TCP) zumindest eine der folgenden Koordinaten aufweist, wie sie von TCP-Segmenten des erfassten Pakets gelesen werden:

i Quellport,
ii Zielport,
iii Flags,
iv Fenster,
v dringend,
vi Optionen,
vii Prüfsumme,
viii vorherige Klassifizierung, entspricht dem letzten Klassifizierungswert, der in dem letzten Netzknoten berechnet wird, durch den das Paket gelaufen ist, wie sie von dem IP-Kopfblock gelesen wird.

6. Das Verfahren gemäß einem der Ansprüche 1 bis 4, bei dem der $C_3$-Vektor in dem Fall des User Datagram Protocol (UDP) zumindest eine der folgenden Koordinaten aufweist, wie sie von den UDP-Segmenten des erfassten Pakets gelesen werden:

i Quellport,
ii Zielport,
iii Länge,
iv Prüfsumme,
v vorherige Klassifizierung, entspricht dem letzten Klassifizierungswert, der in dem letzten Netzknoten berechnet wird, durch den das Paket gelaufen ist, wie sie von dem IP-Kopfblock gelesen wird.

7. Das Verfahren gemäß einem der Ansprüche 1 bis 4, bei dem der $C_3$-Vektor in dem Fall des Internet Control Message Protocol (ICMP) zumindest eine der folgenden Koordinaten aufweist, wie sie von den ICMP-Segmenten des erfassten Pakets gelesen werden:

i Typ,
ii Code,
iii Prüfsumme,
iv vorherige Klassifizierung, entspricht dem letzten Klassifizierungswert, der in dem letzten Netzknoten berechnet wird, durch den das Paket gelaufen ist, wie sie von dem IP-Kopfblock gelesen wird.

8. Das Verfahren gemäß einem der vorherigen Ansprüche, das ferner ein Verwenden des Optionen-Felds des IP-Kopfblocks des erfassten Pakets zum Speichern des berechneten Satzes von Klassifizierungswerten aufweist.

9. Ein System (30, 51, 68) zum Klassifizieren von Verkehr in einem Kommunikationsnetz, wobei das System (30, 51, 68) eine Einrichtung zum Ausführen des Verfahrens gemäß einem der vorherigen Ansprüche aufweist.

10. Das System (30, 51, 68) gemäß Anspruch 9, wobei das System folgende Merkmale aufweist:

• ein erstes Modul (31), das zum Erfassen von IP-Paketen (35) von dem Kommunikationsnetz ausgebildet ist;
• ein zweites Modul (32), das zum Profilieren der erfassten Pakete (36) durch Zuweisen eines Vektors zu jedem der erfassten Pakete (36) gemäß einem Satz bestimmter Charakteristika ausgebildet ist;
• ein drittes Modul (33), das zum Berechnen eines Satzes von Klassifizierungswerten für jedes der profilierten Pakete (37) gemäß seinen IP-Kopfblock-Informationen und seinen spezifischen Protokoll-Kopfblock-Informationen ausgebildet ist;
• ein viertes Modul (34), das zum Neuschreiben von Kopfblöcken der erfassten Pakete (35), einschließlich der berechneten Klassifizierungswerte auf einem IP-Kopfblock, ausgebildet ist.

**11.** Das System (30, 51, 68) gemäß Anspruch 10, wobei das System (30, 51, 68) mit zumindest einem Netzknoten (52, 62, 64, 66) des Kommunikationsnetzes verbindbar ist.

**12.** Das System (30, 51, 68) gemäß Anspruch 11, wobei das System (30, 51, 68) zum Arbeiten in einem von zwei Betriebsmodi ausgebildet ist:

a) einem Übungsmodus, bei dem Knoten eines Neuronal-Netzes (40) automatisch unter Verwendung von Koordinaten ($C_1$, $C_2$, $C_3$) erfasster Pakete (35) aus bekanntem realen Netzverkehr erzeugt werden;
b) einem Abbildungsmodus, bei dem erfasste Pakete (35) unter Verwendung bereits erzeugter Knoten des Neuronal-Netzes (40) klassifiziert werden.

**13.** Ein Computerprogramm mit einer Computerprogrammcodeeinrichtung, angepasst, um das Verfahren gemäß einem der Ansprüche 1 bis 8 durchzuführen, wenn das Programm auf einem Computer, einem Digitalsignalprozessor, einem frei programmierbaren Gatterarray, einer anwendungsspezifischen integrierten Schaltung, einem Mikroprozessor, einer Mikrosteuerung oder einer beliebigen anderen Form programmierbarer Hardware läuft.

## Revendications

**1.** Méthode de classification de trafic dans un réseau de communication, laquelle dite méthode comprend les étapes de :

- capture de paquets IP (35) provenant dudit dans un réseau de communication ;
- profilage desdits paquets IP capturés (36) par l'attribution d'un vecteur à chacun desdits paquets capturés (36) selon un ensemble de caractéristiques déterminées ;
- calcul d'un ensemble de valeurs de classification pour chacun desdits paquets profilés (37) selon leurs informations d'en-têtes IP et des informations d'en-têtes d'un protocole encapsulé dans les paquets IP capturés (36) ;

**caractérisée en ce que** la méthode comprend en outre l'étape de :

- réécriture des entêtes desdits paquets capturés (35), en incluant lesdites valeurs de classification calculées sur un en-tête IP ;

et **en ce que** le vecteur assigné est un vecteur tridimensionnel ($C_1$, $C_2$, $C_3$) où :

- $C_1$ est le protocole encapsulé dudit paquet capturé (35), tel que lu à partir de l'en-tête IP ;
- $C_2$ est un vecteur qui comprend des informations des données d'en-tête IP dudit paquet capturé (35) ;
- $C_3$ est un vecteur qui comprend des informations des données d'en-tête du protocole encapsulé dudit paquet capturé (35), dont la dimension dépend du contenu de coordonnée $C_1$.

**2.** Méthode selon la revendication 1, dans laquelle ledit ensemble calculé de valeurs de classification comprend deux octets $V_1$ et $V_2$, où :

- $Vi$ est le résultat de la projection de $C_2$ dans un espace à une dimension par l'utilisation d'une transformation de réseau neuronal qui préserve l'ordre topologique basé sur une distance relative entre noeuds et
- $V_2$ est le résultat de la projection de $C_3$ dans un espace à une dimension par l'utilisation d'une transformation de réseau neuronal qui préserve l'ordre topologique basé sur une distance relative entre noeuds.

**3.** Méthode selon la revendication 2, dans laquelle ladite distance relative entre noeuds est calculée de la manière suivante :

$$D(A, B, p, i) = \sum_j W_{pij} \left( C(A)_{pij} - C(B)_{pij} \right)^2$$

où :

- $C(X)_{pij}$ est utilisé pour désigner un élément concret d'une caractérisation de paquet $X$,

- *p* est le protocole,
- *i* est la coordonnée dudit vecteur ($C_1$, $C_2$, $C_3$) attribuée par un second module (32) du système pour lequel la fonction de distance est appliquée,
- *j* indique les coordonnées du vecteur $C_i$,
- *A et B* sont les paquets dont la distance est mesurée,
- $W_{pij}$ est un vecteur, personnalisé pour chaque protocole *p* et coordonnées *j, i,* utilisé pour donner plus de poids à certains composants de paquet sur d'autres.

**4.** Méthode selon l'une quelconque des revendications 1 à 3, dans laquelle le vecteur $C_2$ comprend au moins l'une des coordonnées suivantes, telles que lues à partir de l'en-tête IP du paquet capturé :

    i. Longueur d'En-tête Internet,
    ii. Type de Service,
    iii. Longueur Totale,
    iv. Drapeaux IP,
    v. TTL (Temps restant à vivre),
    vi. Décalage de Fragment,
    vii. Classification précédente, correspondant à la dernière valeur de classification calculée dans le dernier noeud de réseau au travers duquel le paquet est passé.

**5.** Méthode selon l'une quelconque des revendications 1 à 4, dans laquelle le vecteur $C_3$, dans le cas du Protocole de Contrôle de Transmission (TCP) comprend, au moins, l'une des coordonnées suivantes, telles que lues à partir des segments TCP du paquet capturé :

    i. Port Source,
    ii. Port de Destination,
    iii. Drapeaux,
    iv. Fenêtre,
    v. Urgent,
    vi. Options,
    vii. Somme de contrôle,
    viii. Classification précédente, correspondant à la dernière valeur de classification calculée dans le dernier noeud de réseau au travers duquel le paquet est passé, telle que lue à partir de l'en-tête IP.

**6.** Méthode selon l'une quelconque des revendications 1 à 4, dans laquelle le vecteur $C_3$, dans le cas du Protocole de Datagramme Utilisateur (UDP) comprend, au moins, l'une des coordonnées suivantes, telles que lues à partir des segments UDP du paquet capturé :

    i. Port Source,
    ii. Port de Destination,
    iii. Longueur,
    iv. Somme de contrôle,
    v. Classification précédente, correspondant à la dernière valeur de classification calculée dans le dernier noeud de réseau au travers duquel le paquet est passé, telle que lue à partir de l'en-tête IP.

**7.** Méthode selon l'une quelconque des revendications 1 à 4, dans laquelle le vecteur $C_3$, dans le cas du Protocole de Message de Contrôle sur Internet (ICMP) comprend, au moins, l'une des coordonnées suivantes, telles que lues à partir des segments ICMP du paquet capturé :

    i. Type,
    ii. Code,
    iii. Somme de contrôle,
    iv. Classification précédente, correspondant à la dernière valeur de classification calculée dans le dernier noeud de réseau au travers duquel le paquet est passé, telle que lue à partir de l'en-tête IP.

**8.** Méthode selon l'une quelconque des revendications précédentes, comprenant en outre l'utilisation le champ d'options de l'en-tête IP du paquet capturé pour stocker lesdits ensembles calculés de valeurs de classification.

9. Système (30 51 68) de classification du trafic dans un réseau de communication, lequel dit système (30 51 68) comprend des moyens de mise en oeuvre de la méthode selon l'une quelconque des revendications précédentes.

10. Système (30 51 68) selon la revendication 9, ledit système comprenant :

- un premier module (31), configuré pour la capture de paquets IP (35) provenant dudit réseau de communication ;
- un second module (32), configuré pour le profilage desdits paquets capturés (36) par l'attribution d'un vecteur à chacun desdits paquets capturés (36) selon un ensemble de caractéristiques déterminées ;
- un troisième module (33), configuré pour le calcul d'un ensemble de valeurs de classification pour chacun desdits paquets profilés (37) selon leurs informations d'en-tête IP et leurs informations d'en-tête du protocole spécifique ;
- un quatrième module (34), configuré pour la réécriture desdits en-têtes des paquets capturés (35), en incluant lesdites valeurs de classification calculées sur un en-tête IP.

11. Système (30 51 68) selon la revendication 10, lequel dit système (30 51 68) est connectable à, au moins, un noeud de réseau (52 62 64 66) dudit réseau de communication.

12. Système (30 51 68) selon la revendication 11, lequel dit système (30 51 68) est configuré pour fonctionner dans l'un des deux modes de fonctionnement suivants :

- un mode de formation, dans lequel des noeuds d'un réseau neuronal (40) sont générés automatiquement en utilisant les coordonnées $(C_1, C_2, C_3)$ de paquets capturés (35) provenant du trafic réel connu du réseau ;
- un mode de mappage, dans lequel des paquets capturés (35) sont classifiés en utilisant des noeuds de réseau neuronal (40) déjà générés.

13. Programme informatique comprenant des moyens de code de programme informatique adaptés pour exécuter la méthode selon l'une quelconque des revendications 1 à 8 lorsque ledit programme est exécuté sur un ordinateur, un processeur de signal numérique, un réseau de portes programmables *in situ*, un circuit intégré propre à une application, un micro-processeur, un microcontrôleur, ou toute autre forme de matériel programmable.

Figure 1 (prior art)

EP 2 612 481 B1

21

22

23

24

25

26

Check Process

Check Network Access Rules

Filtered Mail

Check Network Actions

Incoming Mail

Figure 2 (prior art)

Figure 3

Figure 4

EP 2 612 481 B1

Figure 5

EP 2 612 481 B1

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004012603 A

**Non-patent literature cited in the description**

- Study on Information security and e-trust on Spanish Households. *8th wave, first quarter 2009. INTECO,* October 2009
- *Computer Security Institute (CSI)/Federal Bureau of Investigation (FBI) 2004 Computer Crime and Security Survey,* 2004, http://www.gocsi.com/forms/csi_survey.jhtml
- *Computer Security Institute (CSI)/Federal Bureau of Investigation (FBI) 2008 Computer Crime and Security Survey,* 2008, http://www.gocsi.com/forms/csi_survey.jhtml
- Within a few months of the first PC viruses appearing in the wild in 1987, companies had set up to sell antivirus software. This led to an arms race in which each tried to outwit the other. Early software came in basically two flavours - scanners and checksummers. **ROSS ANDERSON.** Security Engineering. Wiley Publishinc Inc,
- Recently, antivirus software seems to be getting steadily less effective. **ROSS ANDERSON.** Security Engineering. Wiley Publisinc Inc,